# EUROPEAN PATENT SPECIFICATION

(11) **EP 2 874 463 B1**
(45) Date of publication and mention of the grant of the patent: **04.01.2017**
(21) Application number: 13853596.8
(22) Date of filing: 05.11.2013
(51) Int. Cl.: H04M 1/725

(54) **MOBILE TERMINAL STANDBY METHOD AND DEVICE**
STANDBY-VERFAHREN UND VORRICHTUNG FÜR MOBILES ENDGERÄT
PROCÉDÉ ET DISPOSITIF DE MISE EN VEILLE DE TERMINAL MOBILE

(30) Priority: 12.11.2012 CN 201210451298
(43) Date of publication of application: 20.05.2015
(73) Proprietor: Xiaomi Inc., Beijing 100085 (CN)
(72) Inventor: XIA, Xinqiu, Beijing 100085 (CN)
(74) Representative: Hanna, Peter William Derek
(86) International application number: PCT/CN2013/086535
(87) International publication number: WO 2014/071829

(56) References cited:
- WO-A1-2008/027076
- CN-A- 101 448 340
- CN-A- 101 673 182
- CN-A- 102 957 800
- JP-B2- 4 308 381
- US-A1- 2012 214 463

## Description

### TECHNICAL FIELD

The present disclosure generally relates to the technology of mobile terminal development, and more particularly to a method for enabling a mobile terminal to be on standby and an apparatus thereof

### BACKGROUND

Automobile is a popular transportation means. Unfortunately, many drivers prefer to use mobile terminals while driving, which pose traffic safety problems. It is asserted in an analysis report by the National Highway Traffic Safety Administration of the United States that, there are more than 5,000 people nationwide died in traffic accidents every year, due to lack of concentration on driving. Among others, sending short messages, making phone calls during driving are the most common unsafe behaviors.

There are about 50 countries and districts across the world that the use of a mobile terminal during driving has been explicitly banned. Some countries impose very severe punishment on this, for example, in Singapore, S$ 1,000 of a maximum fine and six months of imprisonment for a first offender, and S$ 2,000 of a maximum fine and 1 year of imprisonment for a repeat offender. In the UK, use of a mobile terminal during driving may incur a charge of "dangerous driving" that could send the offender into prison for two years. Currently in many cities of China, heavy punishment measures have been taken on drivers which use mobile terminals during driving.

Currently, in order to restrict drivers to use mobile terminals during driving, one approach is: monitoring drivers by traffic police, and punishing drivers using mobile terminals, to prohibit drivers from using mobile terminals during driving.

Another approach is as below: photographing and obtaining information through monitoring cameras on roads, and punishing drivers who have been photographed due to the use of mobile terminals during driving, to prohibit drivers from using mobile terminals during driving.

Blind spots exist in both of the above monitoring approaches, so the purpose of management cannot be fully achieved, and use of mobile terminals during driving cannot be effectively reduced.

Accordingly, there are currently no technical solutions to reduce use of mobile terminals during driving.

US 2012/0214463 A1 is representative of the prior art.

### SUMMARY

The present invention provides a method for enabling a mobile terminal to be on standby and an apparatus thereof, in accordance with claims which follow, in order to reduce use of the mobile terminals by the drivers during driving.

According to an aspect, a method for enabling a mobile terminal to be on standby is provided by the present disclosure, including:
determining that a movement speed of the mobile terminal is greater than a preset speed;
judging whether a location of the mobile terminal is within a driver's area; and
enabling the mobile terminal to enter into a standby state, if the location of the mobile terminal is within the driver's area.

According to an aspect, an apparatus for enabling a mobile terminal to be on standby is provided by the present disclosure, including:
a determination unit configured to determine that a movement speed of the mobile terminal is greater than a preset speed;
a judgment unit configured to judge whether a location of the mobile terminal is within a driver's area; and
a standby unit configured to enabling the mobile terminal to enter into a standby state if the location of the mobile terminal is within the driver's area.

A method and an apparatus for enabling a mobile terminal to be on standby are according to an embodiment of the present disclosure, in which, if a movement speed of the mobile terminal is determined to be greater than a preset speed, it may be determined that the mobile terminal is in fast movement, then it is judged whether a location of the mobile terminal is within a driver's area, and if the location of the mobile terminal is within a driver's area, it indicates that the user is using the mobile terminal during driving. In this case, the mobile terminal is enabled to enter into a standby state, whereby the use of the mobile terminal by the driver during driving is restricted and the use of the mobile terminal by the driver during driving is reduced.

It should be understood that, the general description above and the detailed description below are merely exemplary, and do not limit the disclosure.

### BRIEF DESCRIPTION OF THE DRAWINGS

Fig. 1 is a first exemplary flow chart showing a method for enabling a mobile terminal to be on standby according to an embodiment of the present disclosure;
Fig. 2 is an exemplary flow chart showing a method for acquiring a movement speed according to an embodiment of the present disclosure;
Fig. 3 is an exemplary flow chart showing a method for judging a location of a mobile terminal according to an embodiment of the present disclosure;
Fig. 4 is an exemplary flow chart showing a method for comparing pictures according to an embodiment of the present disclosure;
Fig. 5 is a left and front view according to an embodiment of the present disclosure;
Fig. 6 is a left and back view according to an embodiment of the present disclosure;
Fig. 7 is a second exemplary flow chart showing a method for enabling a mobile terminal to be on standby according to an embodiment of the present disclosure;
Fig. 8 is a first exemplary block diagram illustrating an apparatus for enabling a mobile terminal to be on standby according to an embodiment of the present disclosure;
Fig. 9 is a second exemplary block diagram illustrating an apparatus for enabling a mobile terminal to be on standby according to an embodiment of the present disclosure;
Fig. 10 is a third exemplary block diagram illustrating an apparatus for enabling a mobile terminal to be on standby according to an embodiment of the present disclosure;
Fig. 11 is a block diagram illustrating a speed acquiring module according to an embodiment of the present disclosure;
Fig. 12 is a first exemplary block diagram illustrating a judgment unit according to an embodiment of the present disclosure;
Fig. 13 is a block diagram illustrating an image controlling module according to an embodiment of the present disclosure; and
Fig. 14 is a second exemplary block diagram illustrating a judgment unit according to an embodiment of the present disclosure.

Through the above accompany drawings, the specific embodiments of the disclosure have been shown, for which a more detailed description will be given as below. These drawings and textual description are not intended to limit the scope of the concept of the disclosure in any manner, but to explain the concept of the disclosure to those skilled in the art through particular embodiments.

### DETAILED DESCRIPTION

In a method and an apparatus for enabling a mobile terminal to be on standby according to embodiments of the present disclosure, if a movement speed of the mobile terminal is determined to be greater than a preset speed, it is determined that the mobile terminal is in fast movement, then it is judged whether a location of the mobile terminal is within a driver's area, and if the location of the mobile terminal is within a driver's area, it indicates that the user is using the mobile terminal during driving. In this case, the mobile terminal is enabled to enter into a standby state, whereby the use of the mobile terminal by the driver during driving is restricted and the use of the mobile terminal by the driver during driving is reduced.

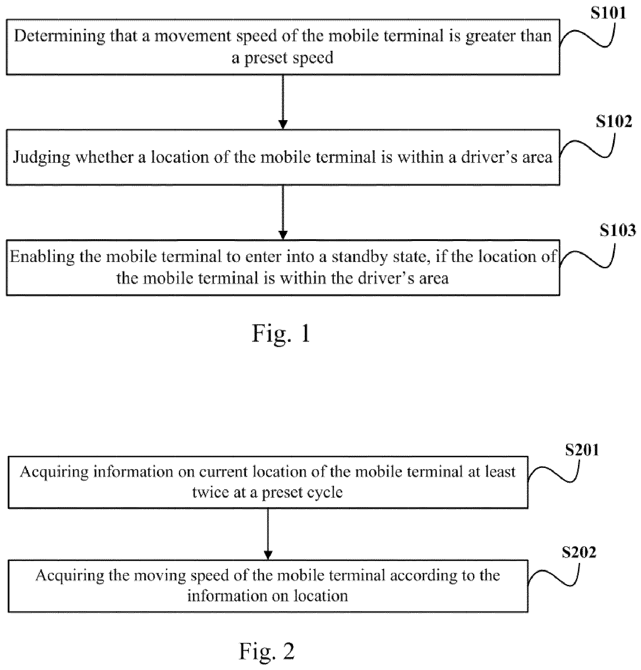

Referring to Fig. 1, a method for enabling a mobile terminal to be on standby is provided by embodiments of the present disclosure, including:
at S101, it is determined that a movement speed of the mobile terminal is greater than a preset speed;
at S102, it is judged whether a location of the mobile terminal is within a driver's area; and
at S103, if the location of the mobile terminal is within the driver's area, the mobile terminal is enabled to enter into a standby state.

When the mobile terminal is moving at a relatively high speed, its movement speed is definitely greater than the preset speed. Then it is judged whether the location of the mobile terminal is within the driver's area. If the location of the mobile terminal is within the driver's area, it indicates that the user is using the mobile terminal during driving, and the mobile terminal may be enabled to enter into the standby state, whereby the use of the mobile terminal by the user during driving is restricted and the use of the mobile terminal by the user during driving is reduced.

Preferably, in order to distinguish a driving state of the user from moving states with relatively low speeds such as a walking state, the preset speed may be set to 5 kilometer/hour. However, the preset speed may be set to other reasonable values by those skilled in the art as long as it may distinguish a driving state and moving states with relatively low speeds such as a walking state of the user.

Preferably, before S101, it may be determined whether the mobile terminal is in an operation state. That is, the determination of the location of the mobile terminal is performed only in case where the mobile terminal is in both an operation state and a moving state, so as to reduce the processing load of the mobile terminal.

In practical application, the determining that the mobile terminal is in the operation state, includes:
it is determined that an operation by the user is received;
it is determined that a call request is accessed; or
it is determined that a short message prompt is generated.

Any of states which require participation of the user, the state may be defined as the operation state. However, the operation state may also include other states that the user is prompted to operate the mobile terminal. For example, it is determined that there is a software prompt automatically popped out by software installed in the mobile terminal.

Preferably, before S101, the mobile terminal may acquire the movement speed of the mobile terminal in real time, so as to improve the accuracy of the judgment of the movement speed of the mobile terminal.

As shown in Fig.2, in practical application, the acquiring the movement speed of the mobile terminal includes:
at S201, information on current location of the mobile terminal is acquired at least twice at a preset cycle; and
at S202, the movement speed of the mobile terminal is acquired according to the information on location.

If among the pieces of information on current location of the mobile terminal acquired for at least twice, two pieces of location information acquired at two different times are different from each other, it indicates that the location of the mobile terminal changes when the two pieces of location information are acquired, and thus it may be determined that the mobile terminal is in a moving state. The movement speed of the mobile terminal may be acquired according to a distance and a time period of the change in locations. Preferably, the information on current location of the mobile terminal may be acquired by a Global Positioning System (GPS). The set cycle may be 50ms-1s.

Another method for acquiring the movement speed of the mobile terminal according to an embodiment of the present disclosure, may include:
a movement speed of the automobile is acquired through an on-board computer as the movement speed of the mobile terminal.

However, other feasible methods may also be adopted by those skilled in the art to acquire the movement speed of the mobile terminal, which will not be repeated herein.

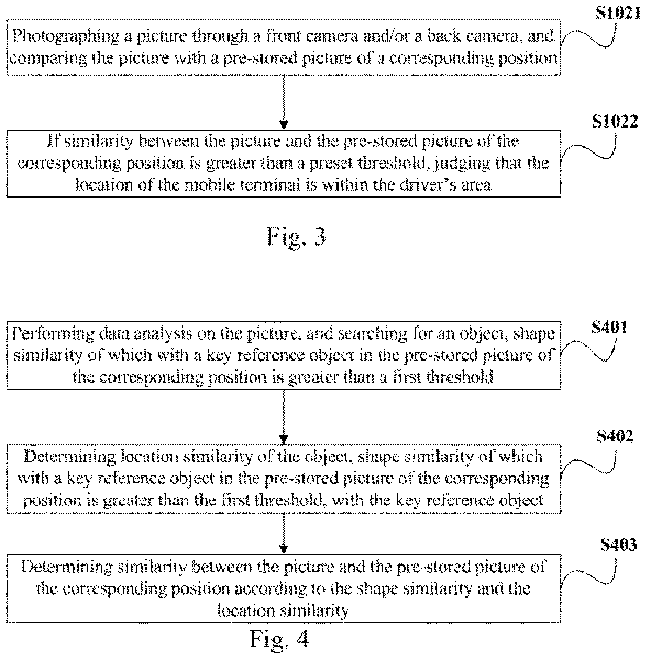

At S102, whether the location of the mobile terminal is within the driver's area may be judged in many manners. Preferably, as shown in Fig.3, a manner for judging whether the location of the mobile terminal is located within the driver's area according to an embodiment of the present disclosure may include:
at S1021, a picture is photographed by a front camera and/or a back camera, and is compared with a pre-stored picture of a corresponding position; and
at S1022, if similarity between the picture and the pre-stored picture of the corresponding position is greater than a preset threshold, it is judged that the location of the mobile terminal is within the driver's area.

In general, there are left-hand drive automobiles and right-hand drive automobiles, and when the user in a driver position holds the mobile terminal with his hand, pictures in front of and/or back of the driver position may be easily photographed. Therefore, the pre-stored picture of a corresponding position may include:
a left and front view which is a picture photographed and stored in advance in front of a driver position in a left-hand drive automobile; a right and front view which is a picture photographed and stored in advance in front of the driver position in a right-hand drive automobile; a left and back view which is a picture photographed and stored in advance back of the driver position in a left-hand drive automobile; and a right and back view which is a picture photographed and stored in advance back of the driver position in a right-hand drive automobile.

The comparing the picture with the pre-stored picture of the corresponding position, includes:
a district where the mobile terminal is located is determined according to a type of a current network; and
if the district where the mobile terminal is located is a left-hand drive district, a picture photographed by the front camera is compared with the left and front view, a picture photographed by the back camera is compared with the left and back view; and if the district where the mobile terminal is located is a right-hand drive district, a picture photographed by the front camera is compared with the right and front view, a picture photographed by the back camera is compared with the right and back view.

Here, the comparing the picture with the pre-stored picture of the corresponding position at S1021 specifically includes:
a district where the driver is located is determined according to a type of a current network; and
if the district where the driver is located is a left-hand drive district, a picture photographed by the front camera is compared with the left and front view, a picture photographed by the back camera is compared with the left and back view; and if the district where the driver is located is a right-hand drive district, a picture photographed by the front camera is compared with the right and front view, a picture photographed by the back camera is compared with the right and back view.

Herein, the determining a district where the driver is located according to a type of a current network may be performed by acquiring a Mobile Country Code (MCC) and a Mobile Network Code (MNC) of the current network. The current country and district may be determined according to the MCC and the MNC, whereby whether the current country and district is a left-hand drive district or a right-hand drive district may be determined (for example, Hong Kong is a right-hand drive district).

Further, a key reference object may be preset in the pre-stored pictures of the corresponding position, and an object with a similar shape to the key reference object is searched for in the picture. The similarity between the picture and the pre-stored picture of the corresponding position may be determined according to shape similarity and location similarity between the key reference object and the object similar in shape. As shown in Fig.4, the comparing the picture with the pre-stored picture of the corresponding position at S1021 includes:
at S401, data analysis is performed on the picture, and an object is searched for, shape similarity of which with a key reference object in the pre-stored picture of the corresponding position is greater than a first threshold;
at S402, location similarity of the object, shape similarity of which with a key reference object in the pre-stored picture of the corresponding position is greater than the first threshold, with the key reference object, is determined; and
at S403, the similarity between the picture and the pre-stored picture of the corresponding position is determined according to the shape similarity and the location similarity.

Herein, S403 may be performed by methods such as data analysis and the like, which will not be repeated herein.

Preferably, the first threshold may be set to 60%-90%, and may be determined specifically according to the selected key reference object. If the key reference object has a small difference in shape between different automobiles, the first threshold may be set to 80%-90%, and if the key reference object may have a relatively large difference in shape between different automobiles, the first threshold may be set to 60%-70%.

The similarity between the picture and the pre-stored picture of the corresponding position is determined according to both of the shape similarity and location similarity, thereby, it is avoided that if it is judged only according to the shape similarity, the user at the co-driver position is also judged as the user driving the automobile, and thus the normal use by the user is interfered. And it is also avoided that if it is judged only according to the location similarity, a misjudgment is made since there is a slight deviation between the photographing location of the picture and the photographing location of the pre-stored picture, and thus the mobile terminal cannot be enabled to enter into the standby state in time while the user is driving the automobile.

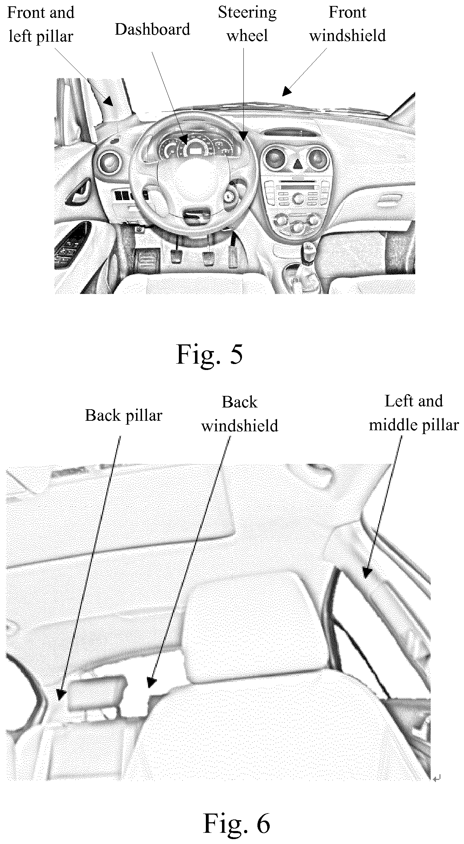

Further, if the pre-stored picture of the corresponding position is the left and front view, as shown in Fig.5, the key reference object at S401 includes one of the following or a combination thereof:
a steering wheel; a dashboard; a left and front pillar; and a front windshield.

If the pre-stored picture of the corresponding position is the right and front view, which is a mirror reflection picture of Fig.5, the key reference object at S401 includes one of the following or a combination thereof:
a steering wheel, a dashboard, a right and front pillar, and a front windshield.
if the pre-stored picture of the corresponding position is the left and back view, as shown in Fig.6, the key reference object at S401 includes one of the following or a combination thereof:
a left and middle pillar, a back windshield, and a back pillar. If the pre-stored picture of the corresponding position is the right and back view, which is a mirror reflection picture of Fig.6, the key reference object at S401 includes one of the following or a combination thereof:
a right and middle pillar, the back windshield, and the back pillar.

However, other feasible methods may be adopted by those skilled in the art to set the key reference object, which will not be repeated herein.

In practical application, the set threshold at S1022 may be set depending on the selection of the key reference object. For example, if the key reference object of the left and front view is a steering wheel or a left and front pillar, since there are many types of steering wheels and a relatively large difference exists between them, the threshold is set to only 60%-70% in order to avoid the situation that the user who is driving is judged as the user who is not driving due to the difference in shape. If the key reference object of the left and back view is a back windshield or a back pillar, since the shape of the back windshield or the back pillar are relatively regular, and there is only a difference in location between the picture of the back windshield or the back pillar photographed at the driver position and the picture of the back windshield or the back pillar photographed at the co-driver position , the threshold may be set to 80%-90% in order to avoid a misjudgment on whether the user is driving the automobile.

A method for judging whether the location of the mobile terminal is within the driver's area according to an embodiment of the present disclosure may include:
whether the location of the mobile terminal is within the driver's area is judged through a sensor of the automobile.

At least one sensor may be mounted at different locations inside the automobile. For example, an infrared sensor is mounted beside the driver's seat, and if the mobile terminal receives a signal from the infrared sensor, it indicates that the mobile terminal is located within the driver's area. In order to avoid blind spots within the driver's area, sensors may be mounted at three to four locations inside the automobile, whereby the accurate location of the mobile terminal may be judged.

However, other sensors may be used by those skilled in the art to judge the accurate location of the mobile terminal, and other feasible methods may also be adopted by those skilled in the art to judge whether the location of the mobile terminal is within the driver's area, which will not be repeated herein.

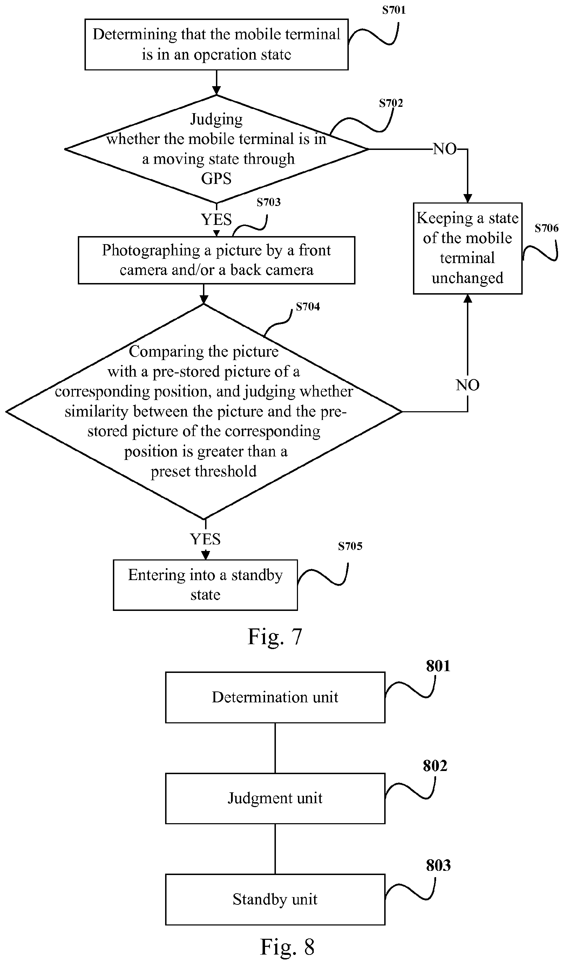

Further, as shown in Fig.7, a specific method for enabling a mobile terminal to be on standby is according to an embodiment of the present disclosure, including:
at S701, it is determined that the mobile terminal is in an operation state;
at S702, it is judged whether the mobile terminal is in a moving state through GPS, if the mobile terminal is in a moving state, S703 is performed, and if the mobile terminal is in a moving state, S706 is performed;
at S703, a picture is photographed by a front camera and/or a back camera;
at S704, the picture is compared with a pre-stored picture of a corresponding position, and it is judged whether similarity between the picture and the pre-stored picture of the corresponding position is greater than a preset threshold, if the similarity is greater than the preset threshold, S705 is performed, and if the similarity is not greater than the preset threshold, S706 is performed; and
at S705, a standby state is entered into; and
at S706, a state of the mobile terminal is kept unchanged.

As shown in Fig.8, an apparatus for enabling a mobile terminal to be on standby is according to an embodiment of the present disclosure, including the following units:
a determination unit 801 is configured to determine that a movement speed of the mobile terminal is greater than a preset speed;
a judgment unit 802 is configured to judge whether a location of the mobile terminal is within a driver's area; and
a standby unit 803 is configured to enabling the mobile terminal to enter into a standby state if the location of the mobile terminal is within the driver's area.

When the mobile terminal is moving at a relatively high speed, its movement speed is definitely greater than the preset speed. Then it is judged whether the location of the mobile terminal is within the driver's area. If the location of the mobile terminal is within the driver's area, it indicates that the user is using the mobile terminal during driving, and the mobile terminal may be enabled to enter into the standby state, so as to restrict the use of the mobile terminal by the user during driving and reduce the use of the mobile terminal by the user during driving.

Preferably, in order to distinguish a driving state and moving states with relatively low speeds such as a walking state of the user, the preset speed may be set to 5 kilometer/hour. However, the preset speed may be set to other reasonable values by those skilled in the art, provided that it may distinguish a driving state and moving states with relatively low speeds such as a walking state of the user.

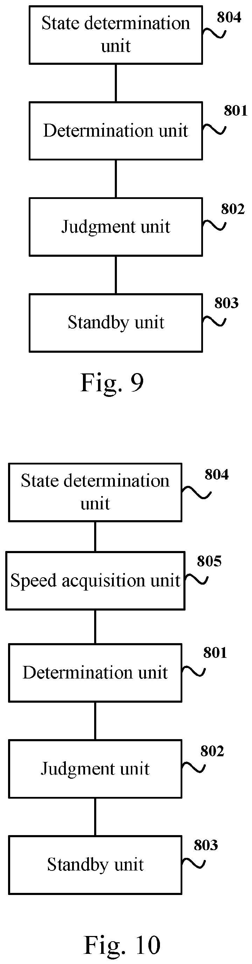

Preferably, as shown in Fig.9, the apparatus for enabling a mobile terminal to be on standby according to an embodiment of the present disclosure also includes: a state determination unit 804, configured to determine whether the mobile terminal is in an operation state.

By determining whether the mobile terminal is in an operation state by the state determination unit 804, the determination of the location of the mobile terminal may be performed only in case where the mobile terminal is in both an operation state and a moving state, so as to reduce the processing load of the mobile terminal.

In practical application, the determining that the mobile terminal is in the operation state by the state determination unit 804, includes:

It is determined that an operation by the user is received;

It is determined that a call request is accessed; or

It is determined that a short message prompt is generated.

Any of states which require participation of the user may be defined as the operation state. However, the operation state may also include other states in which the user is prompted to operate the mobile terminal. For example, it is determined that there is a software prompt automatically popped out by software installed in the mobile terminal.

Preferably, as shown in Fib.10, before the determination unit 801 determines that the movement speed of the mobile terminal is greater than a preset speed, the apparatus for enabling a mobile terminal to be on standby according to an embodiment of the present disclosure further includes the following module:
a speed acquisition unit 805 is configured to acquire the movement speed of the mobile terminal.

The speed acquisition unit 805 may acquire the movement speed of the mobile terminal in real time, so as to improve the accuracy of the judgment of the movement speed of the mobile terminal.

In practical application, as shown in Fib.11, the speed acquisition unit 805 includes the following module:
a GPS module 8051 is configured to acquire information on current location of the mobile terminal at least twice at a preset cycle and acquire the movement speed of the mobile terminal according to the information on location.

If among the pieces of information on current location of the mobile terminal acquired at least twice, two pieces of information on location acquired at two different timings are different from each other, it indicates that the location of the mobile terminal changes when the two pieces of location information are acquired, and thus it may be determined that the mobile terminal is in a moving state. The movement speed of the mobile terminal may be acquired according to a distance and a time period of the change of the location. Preferably, the information on current location of the mobile terminal may be acquired by GPS. The set cycle may be 50ms-1s.

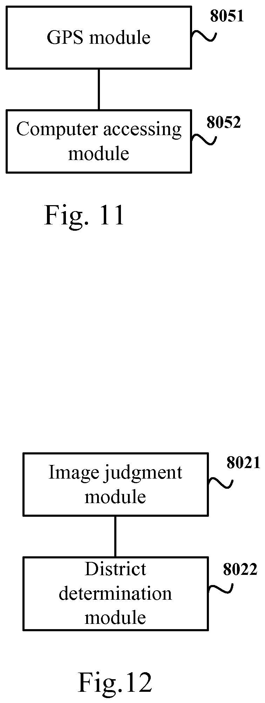

Further, as shown in Fig. 11, the speed acquisition unit 805 may further include the following module:
a computer accessing module 8052 is configured to acquire a movement speed of the automobile through an on-board computer as the movement speed of the mobile terminal.

However, other feasible manners may also be adopted by those skilled in the art to acquire the movement speed of the mobile terminal, which will not be repeated herein.

In practical application, the judgment unit 802 may be provided in various implementations as long as it can judge whether the location of the mobile terminal is within the driver's area. Preferably, a judgment unit 802 according to an embodiment of the present disclosure, as shown in Fib.12, may include the following module:
an image judgment module 8021 is configured to photograph a picture by a front camera and/or a back camera, and compare the picture with a pre-stored picture of a corresponding position, and judge that the location of the mobile terminal is within the driver's area if similarity between the picture and the pre-stored picture of the corresponding position is greater than a preset threshold.

In general, there are left-hand drive automobiles and right-hand drive automobiles, and when the user in a driver position holds the mobile terminal with his hand, pictures in front of and/or back of the driver position may be easily photographed. Therefore, the pre-stored picture of a corresponding position may include:
a left and front view which is a picture photographed and stored in advance in front of a driver position in a left-hand drive automobile; a right and front view which is a picture photographed and stored in advance in front of the driver position in a right-hand drive automobile; a left and back view which is a picture photographed and stored in advance back of the driver position in a left-hand drive automobile; and a right and back view which is a picture photographed and stored in advance back of the driver position in a right-hand drive automobile.

The image judgment module 8021 comparing the picture with the pre-stored picture of the corresponding position, includes:
a district where the mobile terminal is located is determined according to a type of a network; and
if the district where the mobile terminal is located is a left-hand drive district, a picture photographed by the front camera is compared with the left and front view, a picture photographed by the back camera is compared with the left and back view; and if the district where the mobile terminal is located is a right-hand drive district, a picture photographed by the front camera is compared with the right and front view, a picture photographed by the back camera is compared with the right and back view.

Here, as shown in Fir.12, the judgment unit 802 specifically includes the following modules:
a district determination module 8022 is configured to determine a district where the driver is located according to a type of a current network; and
an image judgment module 8021 is configured to compare a picture photographed by the front camera with the left and front view, and compare a picture photographed by the back camera with the left and back view, if the district where the driver is located is a left-hand drive district; and to compare a picture photographed by the front camera with the right and front view, and compare a picture photographed by the back camera with the right and back view, if the district where the driver is located is a right-hand drive district.

Herein, the determining a district where the driver is located according to a type of a network may be performed by acquiring a Mobile Country Code (MCC) and a Mobile Network Code (MNC) of the current network. The current country and district may be determined according to the MCC and the MNC, whereby it may be determined that the current country and district is which of a left-hand drive district or a right-hand drive district.

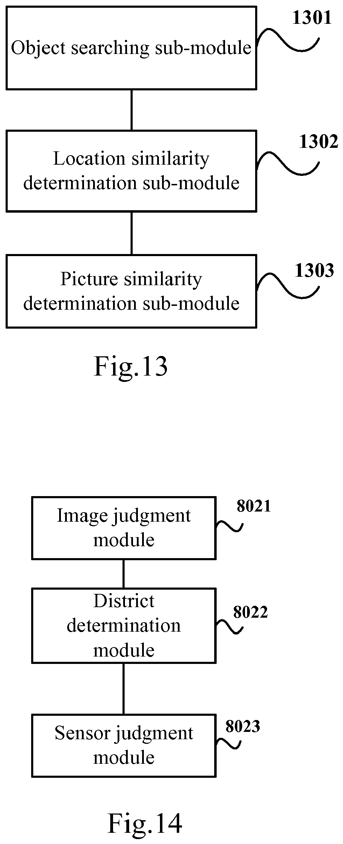

Further, a key reference object may be preset in the pre-stored pictures of the corresponding position, and an object with a similar shape to the key reference object is searched for in the picture. The similarity between the picture and the pre-stored picture of the corresponding position may be determined according to the shape similarity and the location similarity between the key reference object and the object similar in shape. As shown in Fig. 13, the image judgment module 8021 includes the following modules:
an object searching sub-module 1301 is configured to perform data analysis on the picture, and search for an object, shape similarity of which with a key reference object in the pre-stored picture of the corresponding position is greater than a first threshold;
a location similarity determination sub-module 1302 configured to determine location similarity of the object, shape similarity of which with a key reference object in the pre-stored picture of the corresponding position is greater than the first threshold, with the key reference object; and
a picture similarity determination sub-module 1303 is configured to determine similarity between the picture and the pre-stored picture of the corresponding position according to the shape similarity and the location similarity.

Herein, the picture similarity determination sub-module 1303 is configured to determine the similarity between the picture and the pre-stored picture of the corresponding position according to the shape similarity and the location similarity, which may be realized by methods such as data analysis and the like, which will not be repeated herein.

Preferably, the first threshold may be set to 60%-90%, and may be determined specifically according to the selected key reference object. If the key reference object has a small difference in shape between different automobiles, the first threshold may be set to 80%-90%, and if the key reference object may have a relatively large difference in shape between different automobiles, the first threshold may be set to 60%-70%.

The similarity between the picture and the pre-stored picture of the corresponding position is determined according to the similarity both in shapes and in locations, whereby a situation is avoided that if it is judged only according to the shape similarity, the user at the co-driver position is also judged as the user driving the automobile, and thus the normal use by the user is interfered. Another situation is also avoided that if it is judged only according to the location similarity, a misjudgment is made since there is a slight deviation between the photographing location of the picture and the photographing location of the pre-stored picture, and thus the mobile terminal cannot be enabled to enter into the standby state in time while the user is driving the automobile.

Further, if the pre-stored picture of the corresponding position is the left and front view, as shown in Fig.5, the key reference object at S401 includes one of the following or a combination thereof:
a steering wheel, a dashboard, a left and front pillar, and a front windshield.

If the pre-stored picture of the corresponding position is the right and front view, which is a mirror reflection picture of Fig.5, the key reference object at S401 includes one of the following or a combination thereof:
the steering wheel, the dashboard, a right and front pillar, and the front windshield;

If the pre-stored picture of the corresponding position is the left and back view, as shown in Fig.6, the key reference object at S401 includes one of the following or a combination thereof:
a left and middle pillar, a back windshield, and a back pillar; and

If the pre-stored picture of the corresponding position is the right and back view, which is a mirror reflection picture of Fig.6, the key reference object at S401 includes one of the following or a combination thereof:
a right and middle pillar, the back windshield, and the back pillar.

However, other feasible methods may be adopted by those skilled in the art to set the key reference object, which will not be repeated herein.

In practical application, the set threshold according to which the judgment unit 802 performs the judgment may be set depending on the selection of the key reference object. For example, if the key reference object of the left and front view is a steering wheel or a left and front pillar, since there are many types of steering wheels and a relatively large difference exists between them, the threshold is set to only 60%-70% in order to avoid the situation that the user who is driving is judged as the user who is not driving due to the difference in shape. If the key reference object of the left and back view is a back windshield or a back pillar, since the shape of the back windshield or the back pillar is relatively regular, and there is only a difference in location between the picture of the back windshield or the back pillar photographed in the driver position and the picture of the back windshield or the back pillar photographed in the co-driver position, the threshold may be set to 80%-90% in order to avoid a misjudgment on whether the user is driving the automobile.

Preferably, as shown in Fig.14, the judgment unit 802 in the apparatus for enabling a mobile terminal to be on standby according to an embodiment of the present disclosure may also include:
a sensor judgment module 8023 configured to judge whether the location of the mobile terminal is within the driver's area through a sensor of the automobile.

In practical application, at least one sensor may be mounted at different locations inside the automobile. For example, an infrared sensor is mounted beside the driver's seat, and if the mobile terminal receives a signal from the infrared sensor, it indicates that the mobile terminal is located within the driver's area. In order to avoid blind spots within the driver's area, sensors may be mounted at three to four locations inside the automobile, whereby the accurate location of the mobile terminal may be judged.

However, other sensors may be used by those skilled in the art to judge the accurate location of the mobile terminal, and other feasible methods may also be adopted by those skilled in the art to judge whether the location of the mobile terminal is within the driver's area, which will not be repeated herein.

Other feasible methods may be adopted by those skilled in the art to judge whether the location of the mobile terminal is within the driver's area, which will not be repeated herein.

In a method and an apparatus for enabling a mobile terminal to be on standby according to an embodiment of the present disclosure, if a movement speed of the mobile terminal is determined to be greater than a set speed, the mobile terminal is determined to be in fast movement, then it is judged whether a location of the mobile terminal is within a driver's area, and if the location of the mobile terminal is within a driver's area, it indicates that the user is using the mobile terminal during driving, whereby the mobile terminal is enabled to enter into a standby state, so as to restrict use of the mobile terminal by the driver during driving and reduce use of the mobile terminal by the driver during driving.

It should be understood by those skilled in the art, that the embodiments of this disclosure may be provided as methods, systems or computer program products. Therefore, the disclosure may adopt embodiments in forms of hardware only, software only, or a combination of software and hardware. Furthermore, the disclosure may adopt forms of computer program products executed on one or more computer usable storage media (including but not being limited to disk storage and optical storage, etc.) containing computer usable program codes.

The disclosure is described in reference to the method, the device (system) and the flowchart and/or a block diagram of a computer program product according to the embodiments of the disclosure. It should be understood that each process and/or block in the flowcharts and/or block diagrams, and combinations of processes and/or blocks in the flowcharts and/or block diagrams, may be realized by computer program instructions. These computer program instructions may be provided to a generate-purpose computer, a special-purpose computer, an embedded processor, or processors of other programmable data processing devices, to create a machine, such that a device for realizing functions designated in one or more processes in the flowcharts and/or in one or more blocks in the block diagrams, may be created by instructions performed by a computer or processors of other programmable data processing devices.

These computer program instructions may further be stored in a computer readable storage that can boot a computer or other programmable data processing devices to work in a specific way, such that a manufactured goods comprising an instruction device may be created by the instructions stored in the said computer readable storage, and the said instruction device realizes the functions designated in one or more processes in the flowcharts and/or in one or more blocks in the block diagrams.

These computer program instructions may further be loaded into a computer or other programmable data processing devices, such that a series of operating steps may be performed on the computer or other programmable data processing devices, so as to generate processes realized by the computer, such that steps for realizing the functions designated in one or more processes in the flowcharts and/or in one or more blocks in the block diagrams may be provided by the instructions executed on the computer or other programmable data processing devices.

## Claims

1. A method for enabling a mobile terminal to be on standby, comprising;
determining (S101) that a movement speed of the mobile terminal is greater than a preset speed;
judging (S102) whether a location of the mobile terminal is within a driver's area; the judging (S102) comprising:
photographing (S1021) a picture by a front camera and/or a back camera of the mobile terminal, and comparing the picture with a pre-stored picture of a corresponding position;
judging (S1022) that the location of the mobile terminal is within the driver's area, if similarity between the picture and the pre-stored picture of the corresponding position is greater than a preset threshold,
enabling (S103) the mobile terminal to enter into a standby state, if the location of the mobile terminal is within the driver's area,
**characterised in that** the preset threshold is set depending on the selection of a key reference object in the pre-stored picture.

2. The method of claim 1, wherein, before it is determined (S101) that a movement speed of the mobile terminal is greater than a preset speed, the method further comprises:
determining whether the mobile terminal is in an operation state.

3. The method of claim 2, wherein, the determining whether the mobile terminal is in an operation state comprises:
determining that an operation by the user is received;
determining that a call request is accessing; or
determining that a short message prompt is generated.

4. The method of claim 1, wherein, before it is determined that a movement speed of the mobile terminal is greater than a preset speed, the method further comprises:
acquiring (S202) the movement speed of the mobile terminal.

5. The method of claim 1, wherein the pre-stored picture of a corresponding position comprises:
a left and front view which is a picture photographed and stored in advance in front of a driver position of a left-hand drive automobile; a right and front view which is a picture photographed and stored in advance in front of the driver position in a right-hand drive automobile; a left and back view which is a picture photographed and stored in advance back of the driver position in a left-hand drive automobile; and a right and back view which is a picture photographed and stored in advance back of the driver position in a right-hand drive automobile; and
the comparing the picture with a pre-stored picture of a corresponding position, comprises:
determining a district where the mobile terminal is located according to a type of a current network; and
comparing a picture photographed by the front camera with the left and front view, and comparing a picture photographed by the back camera with the left and back view, if the district where the mobile terminal is located is a left-hand drive district; and comparing a picture photographed by the front camera with the right and front view, and comparing a picture photographed by the back camera with the right and back view, if the district where the mobile terminal is located is a right-hand drive district.

6. The method of claim 5, wherein, the comparing the picture with a pre-stored picture of a corresponding position, comprises:
performing data analysis on the picture (S401), and searching for an object, shape similarity of which with the key reference object in the pre-stored picture of the corresponding position is greater than a first threshold;
determining location similarity of the object (S402), shape similarity of which with the key reference object in the pre-stored picture of the corresponding position is greater than the first threshold, with the key reference object; and
determining similarity (S403) between the picture and the pre-stored picture of the corresponding position according to the shape similarity and the location similarity.

7. The method of claim 1, wherein, the judging (S102) whether a location of the mobile terminal is within a driver's area, comprises:
judging whether the location of the mobile terminal is within the driver's area through a sensor of an automobile.

8. An apparatus for enabling a mobile terminal to be on standby, comprising:
a determination unit (801) configured to determine that a movement speed of the mobile terminal is greater than a preset speed;
a judgment unit (802) configured to judge whether a location of the mobile terminal is within a driver's area; the judgment unit (802) comprising:
an image judgment module (8021) configured to photograph a picture by a front camera and/or a back camera of the mobile terminal (S703), and compare the picture with a pre-stored picture of a corresponding position (S704), and judge that the location of the mobile terminal is within the driver's area if similarity between the picture and the pre-stored picture of the corresponding position is greater than a preset threshold, and
a standby unit (803) configured to enabling the mobile terminal to enter into a standby state if the location of the mobile terminal is within the driver's area, **characterised in that** the preset threshold is set depending on the selection of a key reference object in the pre-stored picture.

9. The apparatus of claim 8, wherein, the apparatus further comprises:
a state determination unit (804) configured to determine (S701) whether the mobile terminal is in an operation state.

10. The apparatus of claim 8, wherein, the apparatus further comprises:
a speed acquisition unit (805) configured to acquire the movement speed of the mobile terminal (S702).

11. The apparatus of claim 10, wherein, the judgment unit (802) further comprises:
a district determination module (8022) configured to determine a district where the driver is located according to a type of a current network; and
an image judgment module (8021) configured to compare a picture photographed by the front camera with the left and front view, and compare a picture photographed by the back camera with the left and back view, if the district where the driver is located is a left-hand drive district; and to compare a picture photographed by the front camera with the right and front view, and compare a picture photographed by the back camera with the right and back view, if the district where the driver is located is a right-hand drive district.

12. The apparatus of claim 11, wherein, the image judgment module (8021) comprises:
an object searching sub-module (1301) configured to perform data analysis on the picture, and search for an object, shape similarity of which with the key reference object in the pre-stored picture of the corresponding position is greater than a first threshold;
a location similarity determination sub-module (1302) configured to determine location similarity of the object, shape similarity of which with the key reference object in the pre-stored picture of the corresponding position is greater than the first threshold, with the key reference object; and
a picture similarity determination sub-module (1303) configured to determine similarity between the picture and the pre-stored picture of the corresponding position according to the shape similarity and the location similarity.

13. The apparatus of claim 8, wherein, the judgment unit comprises:
a sensor judgment module (8023) configured to judge whether the location of the mobile terminal is within the driver's area through a sensor of an automobile.

14. A computer program product stored on a computer usable medium, comprising computer-readable program means for causing a mobile terminal to implement the method according to any one of claims 1 to 7.

## Patentansprüche

1. Verfahren, um es zu ermöglichen, dass ein mobiles Endgerät in Standby ist, das Folgendes beinhaltet:
Feststellen (S101), dass eine Bewegungsgeschwindigkeit des mobilen Endgeräts höher ist als eine voreingestellte Geschwindigkeit;
Beurteilen (S102), ob ein Ort des mobilen Endgeräts innerhalb des Bereichs eines Fahrers liegt; wobei das Beurteilen (S102) Folgendes beinhaltet:
Fotografieren (S1021) eines Bildes mit einer Frontkamera und/oder einer Rückkamera des mobilen Endgeräts und Vergleichen des Bildes mit einem vorgespeicherten Bild einer entsprechenden Position;
Beurteilen (S1022), dass der Ort des mobilen Endgerät innerhalb des Bereichs des Fahrers liegt, wenn Ähnlichkeit zwischen dem Bild und dem vorgespeicherten Bild der entsprechenden Position größer ist als eine voreingestellte Schwelle,
Ermöglichen (S103), dass das mobile Endgerät in einen Standby-Zustand eintritt, wenn der Ort des mobilen Endgeräts innerhalb des Bereichs des Fahrers liegt,
**dadurch gekennzeichnet, dass** die voreingestellte Schwelle je nach der Wahl eines Schlüsselreferenzobjekts im vorgespeicherten Bild eingestellt wird.

2. Verfahren nach Anspruch 1, wobei das Verfahren vor dem Feststellen (S101), dass eine Bewegungsgeschwindigkeit des mobilen Endgeräts höher ist als eine voreingestellte Geschwindigkeit, ferner Folgendes beinhaltet:
Feststellen, ob das mobile Endgerät in einem Betriebszustand ist.

3. Verfahren nach Anspruch 2, wobei das Feststellen, ob das mobile Endgerät in einem Betriebszustand ist, Folgendes beinhaltet:
Feststellen, dass eine Betätigung durch den Benutzer empfangen wird;
Feststellen, dass eine Anrufanforderung zugreift; oder
Feststellen, dass ein Kurznachrichten-Prompt erzeugt wird.

4. Verfahren nach Anspruch 1, wobei das Verfahren vor dem Feststellen, dass eine Bewegungsgeschwindigkeit des mobilen Endgerät höher ist als eine voreingestellte Geschwindigkeit, ferner Folgendes beinhaltet:
Erfassen (S202) der Bewegungsgeschwindigkeit des mobilen Endgeräts.

5. Verfahren nach Anspruch 1, wobei das vorgespeicherte Bild einer entsprechenden Position Folgendes umfasst:
eine Links- und Frontansicht, die ein Bild ist, das im Voraus vor einer Fahrerposition eines linksgesteuerten Kraftfahrzeugs fotografiert und gespeichert wurde; eine Rechts- und Frontansicht, die ein Bild ist, das im Voraus vor der Fahrerposition in einem rechtsgesteuerten Kraftfahrzeug fotografiert und gespeichert wurde; eine Links- und Rückansicht, die ein Bild ist, das im Voraus hinter der Fahrerposition in einem linksgesteuerten Kraftfahrzeug fotografiert und gespeichert wurde; und eine Rechts- und Rückansicht, die ein Bild ist, das im Voraus hinter der Fahrerposition in einem rechtsgesteuerten Kraftfahrzeug fotografiert und gespeichert wurde; und
das Vergleichen des Bildes mit einem vorgespeicherten Bild einer entsprechenden Position Folgendes beinhaltet:
Feststellen einer Gegend, in der sich das mobile Endgerät befindet, anhand eines Typs eines aktuellen Netzwerks; und
Vergleichen eines Bildes, das von der Frontkamera fotografiert wurde, mit der Links- und Frontansicht, und Vergleichen eines Bildes, das von der Rückkamera fotografiert wurde, mit der Links- und Rückansicht, wenn die Gegend, in der sich das mobile Endgerät befindet, eine Linksfahrgegend ist; und Vergleichen eines Bildes, das von der Frontkamera fotografiert wurde, mit der Rechts- und Frontansicht, und Vergleichen eines Bildes, das von der Rückkamera fotografiert wurde, mit der Rechts- und Rückansicht, wenn die Gegend, in der sich das mobile Endgerät befindet, eine Rechtsfahrgegend ist.

6. Verfahren nach Anspruch 5, wobei das Vergleichen des Bildes mit einem vorgespeicherten Bild einer entsprechenden Position Folgendes beinhaltet:
Durchführen einer Datenanalyse an dem Bild (S401) und Suchen nach einem Projekt, dessen Formähnlichkeit mit dem Schlüsselreferenzobjekt in dem vorgespeicherten Bild der entsprechenden Position größer ist als eine erste Schwelle;
Feststellen von Ortsähnlichkeit des Objekts (S402), dessen Formähnlichkeit mit dem Schlüsselreferenzobjekt in dem vorgespeicherten Bild der entsprechenden Position größer ist als die erste Schwelle, mit dem Schlüsselreferenzobjekt; und
Feststellen von Ähnlichkeit (S403) zwischen dem Bild und dem vorgespeicherten Bild der entsprechenden Position gemäß der Formähnlichkeit und der Ortsähnlichkeit.

7. Verfahren nach Anspruch 1, wobei das Beurteilen (S102), ob ein Ort des mobilen Endgeräts innerhalb des Bereichs eines Fahrers liegt, Folgendes umfasst:
Beurteilen, ob der Ort des mobilen Endgeräts innerhalb des Bereichs des Fahrers liegt, durch einen Sensor eines Kraftfahrzeugs.

8. Vorrichtung zum Ermöglichen, dass ein mobiles Endgerät in Standby ist, die Folgendes umfasst:
eine Feststellungseinheit (801), konfiguriert zum Feststellen, dass eine Bewegungsgeschwindigkeit des mobilen Endgeräts höher ist als eine voreingestellte Geschwindigkeit;
eine Beurteilungseinheit (802), konfiguriert zum Beurteilen, ob ein Ort des mobilen Endgeräts innerhalb des Bereichs eines Fahrers liegt; wobei die Beurteilungseinheit (802) Folgendes umfasst:
ein Bildbeurteilungsmodul (8021), konfiguriert zum Fotografieren eines Bildes mit einer Frontkamera und/oder einer Rückkamera des mobilen Endgeräts (S703) und zum Vergleichen des Bildes mit einem vorgespeicherten Bild einer entsprechenden Position (S704), und Beurteilen, dass der Ort des mobilen Endgeräts innerhalb des Bereichs des Fahrers liegt, wenn Ähnlichkeit zwischen dem Bild und dem vorgespeicherten Bild der entsprechenden Position größer ist als eine voreingestellte Schwelle, und
eine Standby-Einheit (803), konfiguriert zum Ermöglichen, dass das mobile Endgerät in einen Standby-Zustand eintritt, wenn der Ort des mobilen Endgeräts innerhalb des Bereichs des Fahrers liegt, **dadurch gekennzeichnet, dass** die voreingestellte Schwelle je nach dem Ort eines Schlüsselreferenzobjekts in dem vorgespeicherten Bild eingestellt wird.

9. Vorrichtung nach Anspruch 8, wobei die Vorrichtung ferner Folgendes umfasst:
eine Zustandsfeststellungseinheit (804), konfiguriert zum Feststellen (S701), ob das mobile Endgerät in einem Betriebszustand ist.

10. Vorrichtung nach Anspruch 8, wobei die Vorrichtung ferner Folgendes umfasst:
eine Geschwindigkeitserfassungseinheit (805), konfiguriert zum Erfassen der Bewegungsgeschwindigkeit des mobilen Endgeräts (S702).

11. Vorrichtung nach Anspruch 10, wobei die Beurteilungseinheit (802) ferner Folgendes umfasst:
ein Gegendfeststellungsmodul (8022), konfiguriert zum Feststellen einer Gegend, in der sich der Fahrer befindet, anhand eines Typs eines aktuellen Netzwerks; und
ein Bildbeurteilungsmodul (8021), konfiguriert zum Vergleichen eines Bildes, das von der Frontkamera mit der Links- und Frontansicht fotografiert wurde, und zum Vergleichen eines Bildes, das von der Rückkamera mit der Links- und Rückansicht fotografiert wurde, wenn die Gegend, in der sich der Fahrer befindet, eine Linksfahrgegend ist; und zum Vergleichen eines Bildes, das von der Frontkamera mit der Rechts- und Frontansicht fotografiert wurde, und zum Vergleichen eines Bildes, das von der Rückkamera mit der Rechts- und Rückansicht fotografiert wurde, wenn die Gegend, in der sich der Fahrer befindet, eine Rechtsfahrgegend ist.

12. Vorrichtung nach Anspruch 11, wobei das Bildbeurteilungsmodul (8021) Folgendes umfasst:
ein Objektsuchsubmodul (1301), konfiguriert zum Durchführen einer Datenanalyse an dem Bild und zum Suchen nach einem Objekt, dessen Formähnlichkeit mit dem Schlüsselreferenzobjekt in dem vorgespeicherten Bild der entsprechenden Position größer ist als ein erster Schwellenwert;
ein Ortsähnlichkeitsfeststellungssubmodul (1302), konfiguriert zum Feststellen von Ortsähnlichkeit des Objekts, dessen Formähnlichkeit mit dem Schlüsselreferenzobjekt in dem vorgespeicherten Bild der entsprechenden Position größer ist als der erste Schwellenwert, mit dem Schlüsselreferenzobjekt; und
ein Bildähnlichkeitsfeststellungssubmodul (1303), konfiguriert zum Feststellen von Ähnlichkeit zwischen dem Bild und dem vorgespeicherten Bild der entsprechenden Position gemäß der Formähnlichkeit und der Ortsähnlichkeit.

13. Vorrichtung nach Anspruch 8, wobei die Beurteilungseinheit Folgendes umfasst:
ein Sensorbeurteilungsmodul (8023), konfiguriert zum Beurteilen, ob der Ort des mobilen Endgeräts innerhalb des Bereichs des Fahrers liegt, durch einen Sensor eines Kraftfahrzeugs.

14. Computerprogrammprodukt, das auf einem von einem Computer benutzbaren Medium gespeichert ist, das computerlesbare Programmmittel umfasst, um zu bewirken, dass ein mobiles Endgerät das Verfahren nach einem der Ansprüche 1 bis 7 ausführt.

## Revendications

1. Un procédé destiné à permettre à un terminal mobile d'être en veille, comprenant :
la détermination (S101) qu'une vitesse de déplacement du terminal mobile est supérieure à une vitesse prédéfinie,
l'estimation (S102) si un emplacement du terminal mobile se situe à l'intérieur d'une zone d'un conducteur, l'estimation (S102) comprenant :
la prise (S1021) d'une photo au moyen d'une caméra avant et/ou d'une caméra arrière du terminal mobile et la comparaison de la photo à une photo pré-conservée en mémoire d'une position correspondante, et
l'estimation (S1022) que l'emplacement du terminal mobile se situe à l'intérieur de la zone du conducteur si une similarité entre la photo et la photo pré-conservée en mémoire de la position correspondante est supérieure à un seuil prédéfini,
permettre (S103) au terminal mobile d'entrer dans un état de veille si l'emplacement du terminal mobile se situe à l'intérieur de la zone du conducteur,
**caractérisé en ce que** le seuil prédéfini est défini en fonction de la sélection d'un objet de référence clé dans la photo pré-conservée en mémoire.

2. Le procédé selon la Revendication 1, où, avant qu'il soit déterminé (S101) qu'une vitesse de déplacement du terminal mobile est supérieure à une vitesse prédéfinie, le procédé comprend en outre :
la détermination si le terminal mobile est dans un état de fonctionnement.

3. Le procédé selon la Revendication 2, où, la détermination si le terminal mobile est dans un état de fonctionnement comprend :
la détermination qu'une opération par l'utilisateur est reçue,
la détermination qu'une demande d'appel est en train d'accéder, ou
la détermination qu'une invite de message court est générée.

4. Le procédé selon la Revendication 1, où, avant qu'il soit déterminé qu'une vitesse de déplacement du terminal mobile est supérieure à une vitesse prédéfinie, le procédé comprend en outre :
l'acquisition (S202) de la vitesse de déplacement du terminal mobile.

5. Le procédé selon la Revendication 1, où la photo pré-conservée en mémoire d'une position correspondante comprend :
une vue vers l'avant et la gauche qui est une photo prise et conservée en mémoire à l'avance à l'avant d'une position d'un conducteur d'une automobile à conduite à gauche, une vue vers l'avant et la droite qui est une photo prise et conservée en mémoire à l'avance à l'avant de la position d'un conducteur dans une automobile à conduite à droite, une vue vers l'arrière et la gauche qui est une photo prise et
conservée en mémoire à l'avance à l'arrière de la position d'un conducteur dans une automobile à conduite à gauche, et une vue vers l'arrière et la droite qui est une photo prise et conservée en mémoire à l'avance à l'arrière de la position d'un conducteur dans une automobile à conduite à droite, et
la comparaison de la photo à une photo pré-conservée en mémoire d'une position correspondante, comprend :
la détermination d'un secteur dans lequel le terminal mobile se situe en fonction d'un type d'un réseau actuel, et
la comparaison d'une photo prise par la caméra avant à la vue vers l'avant et la gauche, et la comparaison d'une photo prise par la caméra arrière à la vue vers l'arrière et la gauche si le secteur dans lequel le terminal mobile se situe est un secteur de conduite à gauche, et la comparaison d'une photo prise par la caméra avant à la vue vers l'avant et la droite, et la comparaison d'une photo prise par la caméra arrière à la vue vers l'arrière et la droite si le secteur dans lequel le terminal mobile se situe est un secteur de conduite à droite.

6. Le procédé selon la Revendication 5, où, la comparaison de la photo à une photo pré-conservée en mémoire d'une position correspondante, comprend :
l'exécution d'une analyse de données sur la photo (S401) et la recherche d'un objet dont la similarité de forme avec l'objet de référence clé dans la photo pré-conservée en mémoire de la position correspondante est supérieure à un premier seuil,
la détermination d'une similarité d'emplacement de l'objet (S402) dont la similarité de forme avec l'objet de référence clé dans la photo pré-conservée en mémoire de la position correspondante est supérieure au premier seuil avec l'objet de référence clé,
et
la détermination d'une similarité (S403) entre la photo et la photo pré-conservée en mémoire de la position correspondante en fonction de la similarité de forme et de la similarité d'emplacement.

7. Le procédé selon la Revendication 1, où l'estimation (S 102) si un emplacement du terminal mobile se situe à l'intérieur d'une zone d'un conducteur, comprend :
l'estimation si l'emplacement du terminal mobile se situe à l'intérieur de la zone du conducteur par l'intermédiaire d'un capteur d'une automobile.

8. Un appareil destiné à permettre à un terminal mobile d'être en veille, comprenant :
une unité de détermination (801) configurée de façon à déterminer qu'une vitesse de déplacement du terminal mobile est supérieure à une vitesse prédéfinie,
une unité d'estimation (802) configurée de façon à estimer si un emplacement du terminal mobile se situe à l'intérieur d'une zone d'un conducteur, l'unité d'estimation (802) comprenant :
un module d'estimation d'image (8021) configuré de façon à prendre une photo au moyen d'une caméra avant et/ou d'une caméra arrière du terminal mobile (S703) et à comparer la photo à une photo pré-conservée en mémoire d'une position correspondante (S704), et à estimer que l'emplacement du terminal mobile se situe à l'intérieur de la zone du conducteur si une similarité entre la photo et la photo pré-conservée en mémoire de la position correspondante est supérieure à un seuil prédéfini, et
une unité de veille (803) configurée de façon à permettre au terminal mobile d'entrer dans un état de veille si l'emplacement du terminal mobile se situe à l'intérieur de la zone du conducteur, **caractérisé en ce que** le seuil prédéfini est défini en fonction de la sélection d'un objet de référence clé dans la photo pré-conservée en mémoire.

9. L'appareil selon la Revendication 8, où, l'appareil comprend en outre :
une unité de détermination d'état (804) configurée de façon à déterminer (S701) si le terminal mobile est dans un état de fonctionnement.

10. L'appareil selon la Revendication 8, où, l'appareil comprend en outre :
une unité d'acquisition de vitesse (805) configurée de façon à acquérir la vitesse de déplacement du terminal mobile (S702).

11. L'appareil selon la Revendication 10, où l'unité d'estimation (802) comprend en outre :
un module de détermination de secteur (8022) configuré de façon à déterminer un secteur dans lequel le conducteur se situe en fonction d'un type d'un réseau actuel, et un module d'estimation d'image (8021) configuré de façon à comparer une photo prise par la caméra avant à la vue vers l'avant et la gauche et à comparer une photo prise par la caméra arrière à la vue vers l'arrière et la gauche si le secteur dans lequel le conducteur se situe est un secteur de conduite à gauche, et à comparer une photo prise par la caméra avant à la vue vers l'avant et la droite, et à comparer une photo prise par la caméra arrière à la vue vers l'arrière et la droite si le secteur dans lequel le conducteur se situe est un secteur de conduite à droite.

12. L'appareil selon la Revendication 11, où le module d'estimation d'image (8021) comprend :
un sous-module de recherche d'objet (1301) configuré de façon à exécuter une analyse de données sur la photo et à rechercher un objet dont la similarité de forme avec l'objet de référence clé dans la photo pré-conservée en mémoire de la position correspondante est supérieure à un premier seuil,
un sous-module de détermination de similarité d'emplacement (1302) configuré de façon à déterminer une similarité d'emplacement de l'objet dont la similarité de forme avec l'objet de référence clé dans la photo pré-conservée en mémoire de la position correspondante est supérieure au premier seuil avec l'objet de référence clé, et
un sous-module de détermination de similarité de photos (1303) configuré de façon à déterminer une similarité entre la photo et la photo pré-conservée en mémoire de la position correspondante en fonction de la similarité de forme et de la similarité d'emplacement.

13. L'appareil selon la Revendication 8, où, l'unité d'estimation comprend :
un module d'estimation de capteur (8023) configuré de façon à estimer si l'emplacement du terminal mobile se situe à l'intérieur de la zone du conducteur par l'intermédiaire d'un capteur d'une automobile.

14. Un produit de programme informatique conservé en mémoire sur un support utilisable par un ordinateur contenant un moyen de programme lisible par ordinateur destiné à amener un terminal mobile à mettre en oeuvre le procédé selon l'une quelconque des Revendications 1 à 7.
